# EUROPÄISCHE PATENTANMELDUNG

(11) **EP 1 579 751 A1**
(43) Veröffentlichungstag der Anmeldung: **28.09.2005**
(21) Anmeldenummer: 05396003.5
(22) Anmeldetag: 31.01.2005
(51) Int. Cl.: A01B 63/16, A01B 61/04

(54) **Saatmaschine**

(30) Priorität: 23.03.2004 FI 20040441
(62) Teilanmeldung aus: 05075367.2
(71) Anmelder: Junkkari OY, 62375 Ylihärmä (FI)
(72) Erfinder: Tarkkinen, Tapio, 62375 Ylihärmä (FI); Kielinen, Jukka, 62420 Kortesjärvi (FI); Ruokoja, Toni, 62100 Lapua (FI)

(57) **Zusammenfassung**

In dieser Veröffentlichung ist eine Saatmaschine beschrieben, die eine an die Arbeitsmaschine anzukoppelnde Deichsel (1), den die Vorrichtung tragenden Hauptrahmen (2) und daran um die Achse (C) gedrehten Rahmen (17) aufweist, mit dem die Walzenrollen (36) über die Gabeln (19) verdreht mittels der Achsen (D) verbunden werden. Der Hauptrahmen (2) weist mindestens zwei hintereinander angeordnete Befestigungsachsen (4) und (5) auf, mit denen über Gelenkpunkte (A) und (B) verdreht die Schararme (6) und (7) verbunden werden. An den oberen Enden der Arme sind Spannvorrichtungen (30) befestigt, deren ein Ende an dem Rahmen der erwähnten Walzenrollen am Punkt (J) so befestigt ist, dass durch Ändern der Höhenposition der Saatmaschine die Druckkraft des Schars eingestellt werden kann. Somit kann die Maschine an möglichst unterschiedliche Saatbedingungen angepasst werden. Die Kräfte der Spannvorrichtungen zwischen den Scharreihen werden mit einem Schwenkhebel (16) ausgeglichen. Der Druckausgleich der Walzenrollen (36) findet mittels der Schwenkhebel (21) und der Reaktionsstangen (20) statt.

## Beschreibung

### Bereich der Erfindung

Die vorliegende Erfindung betrifft eine Saatvorrichtung entsprechend Patentanspruch 1 Hintergrund der Erfindung

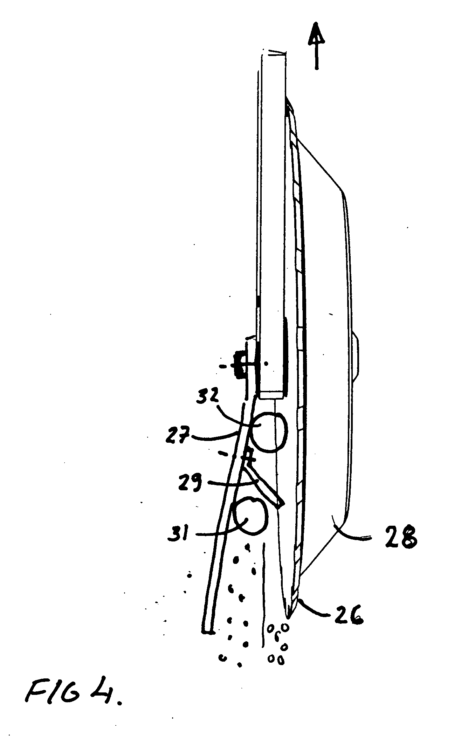

Um das Ergebnis der Saatarbeit in einer Situation zu maximieren, wo die Senkung des Preises für Getreide kontinuierlich ist, werden die Ersparnismaßnahmen in erster Linie auf Bearbeitungs- und Saatkosten gerichtet. Zugleich werden durch Einsatz der bestmöglichen Saattechnik die hohe Qualität und die Menge der Ernte angestrebt. Es wird über Verfahren der traditionellen, reduzierten Bodenbearbeitung und der Direktsaat gesprochen. In diesen Verfahren wird der Schartechnik der Saatmaschine eine unterschiedliche Funktion insbesondere in Bezug auf den Druck abverlangt. Zu dem Saatgebiet des gleichen Landwirts können Bodensorten gehören, die den Einsatz von sämtlichen aufgeführten Saatverfahren erfordern, um ein optimales Ergebnis zu erzielen. Ein wichtiger Faktor bei der Arbeit ist das Säen der Samen in die gleiche gewünschte Tiefe, wobei eine möglichst gleichmäßige Keimung und ein gleichmäßiger Pflanzenbestand erhalten werden. Eine dieses Ergebnis anstrebende Maschine ist in der Veröffentlichung FI86359 dargestellt, bei welcher Anlage die Schararme mit Drehgummifedern an dem Rahmen der Maschine befestigt sind. In einer solchen Konstruktion ist die Vertikalbewegung des Schars unzureichend. Die anderen Enden der Arme werden mit den Befestigungsarmen der Tragrollen verbunden und bilden ein die gesamte Maschine unterstützendes unvorteilhaftes Federungssystem, wobei die Saattiefe entsprechend dem Füllgrad der Maschine variiert. Es ist versucht worden, diesen Nachteil zu reduzieren, indem eine Anzeige gebaut worden ist, mit deren Hilfe der Führer gezwungen wird, kontinuierliche Einstellarbeit vorzunehmen. Die Laufräder der Anlage sind mit den Armen der Schare verbunden und legen somit die Lauftiefe, d.h. die Saattiefe fest. Nachteilig hierbei ist, dass der Boden jedoch auch in Laufrichtung ein wenig ungleichmäßig ist, wie in der Veröffentlichung FI86359 Abb. 4 dargestellt wird, und dann kann das sehr weit von der Sästelle angeordnete Laufrad die erforderliche Saattiefe nicht mit ausreichender Genauigkeit festlegen. Die Veröffentlichung WO99/27766 ist mit der Obigen nahezu identisch. In der Veröffentlichung US 4,149,475 ist eine Ausführungsform der Direktsaatmaschine zu sehen, bei der der Druck relativ unabhängig von dem Laufrad ist, jedoch gleicht das System den Druck des Schars der vorderen und hinteren Reihe durchschnittlich mit Hilfe der drehbaren Welle und der Hebel sowie der Federn aus. In der Veröffentlichung DE2921014 wird der Druck des Schars durch das Verhältnis der Hebelanne vorgenommen. Die zwei oben aufgeführten Konstruktionen werden unvorteilhaft lang ausgeführt, wenn an die Saatmaschine die Laufräder entsprechend der heutigen Praxis hinter die Maschine angeschlossen werden. In der Veröffentlichung ist auch ersichtlich, wie der Dünger und der Samen in gleiche Reihe gesät werden.

Über die Düngeranordnung wird heute lebhaft diskutiert. Die finnischen Sädüngmaschinen bringen den Dünger in jede zweite Reihe. In US2,861,527 wird eine Alternative über das Säen in gleiche Reihe vorgestellt. Oft ist bei den besten Saatmaschinen der Schardruck relativ unabhängig von der Stellung der Laufräder. Bei denen wird der Schardruck mittels Federn zentral von einer Stelle eingestellt, wie in der Veröffentlichung US2,713,836 dargestellt.

Die Samen ebenso wie die Dünger werden mit sehr ähnlichen Vorrichtungen gesät, um die richtige Menge und Tiefe zu erzielen. Dieses behandelt u. a. die Veröffentlichung US3,122,111, die der Veröffentlichung FI103937 sehr ähnlich ist. Die Tragrolle hinter dem Schar, wie in der Veröffentlichung US3,799,079, findet in unterschiedlichen Versionen in einigen modernen Maschinen Anwendung. In der Praxis ist es jedoch leicht festzustellen, dass ein solches Schar auf Grund der Ungleichmäßigkeit des Bodens nur zufällig in die genau gewünschte Tiefe sät. Die Veröffentlichung US2,920,587 stellt eine entwickelte Version vom Schar vor, bei der die gleiche Vorrichtung sowohl den Dünger als die Samen anlegt. An die Drillscheibe ist ein Tiefengbegrenzungsring eingebaut, der der Samenaustragöffnung möglichst nah angeordnet ist und eine gleichmäßige Saattiefe sicherstellt. Nachteil einer solchen Konstruktion ist, dass die Einstellung der Tiefe nur gelingt, indem die Höhenposition des Begrenzungsrings geändert wird.

In den derzeitigen Saatmaschinen werden im Allgemeinen Laufräder als Walzenrollen genutzt, die hinter der Maschine so angeordnet sind, dass sie den Boden ebnen und die Samen fest in die Erde walzen. Die Vorrichtungen der Veröffentlichungen FI27897, FI88851 und FI112586 B weisen möglichst primitive Walzenrollen auf, die zu einem steifen Klotz verbunden sind. Auch wenn die Ebenheit des Feldes heutzutage relativ gut ist, ist bei solchen Walzenrollen der ungleichmäßige Druck nachteilig, wobei auf den Samenreihen Schichten von unterschiedlicher Dicke bleiben, was zu ungleichmäßiger Keimung führt. Eine etwas weiter entwickelte Version ist in der Veröffentlichung FI92546 zu finden, bei der der Walzenklotz mit Hydraulik ausgeglichen wird. Nachteilig ist hier das zufällige Geraten der kompletten Maschine auf ein Rad, wobei sie zu Bruch kommen kann. In den Veröffentlichungen FI5595 und FI880518 wird eine noch weiter entwickelte Version vorgestellt, bei der die Räder paarweise am gleichen Arm angeordnet sind. Auf Grund der Unebenheit des Feldes ist es augenscheinlich, wie eines der Räder ganze Zeit in unterschiedlicher Tiefe in Bezug auf den Boden zu laufen scheint. In der Veröffentlichung FI973192 ist versucht worden, dieses Problem zu beheben, jedoch beim Neigen des Rads gerät es von der gewalzten Reihe zur Seite.

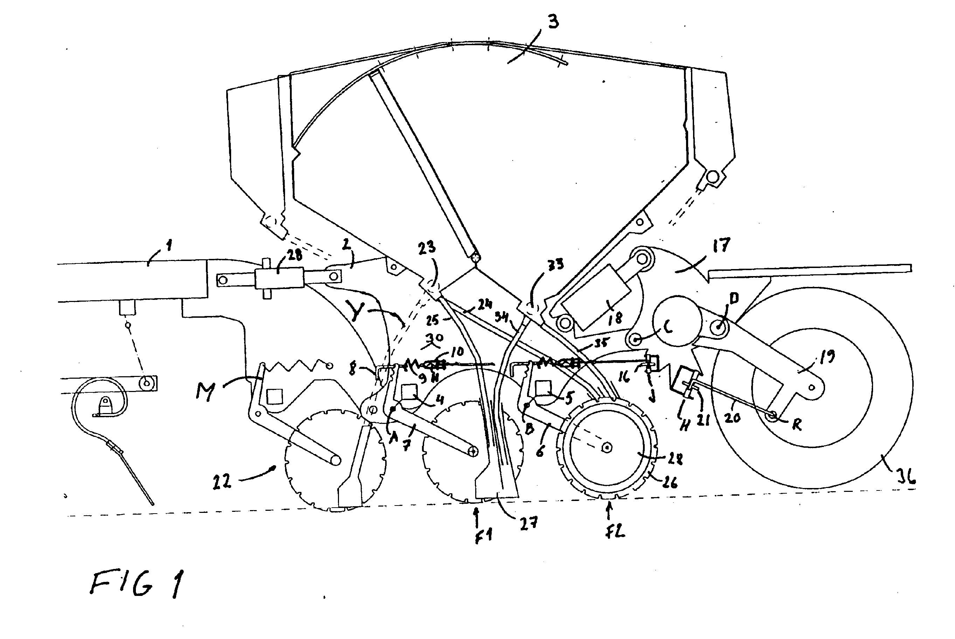

An eine moderne Saatmaschine sind oft verschiedene Bodenbearbeitungsvorrichtungen angeschlossen, wobei Kombinationen entsprechend der Veröffentlichung FI844080 entstehen können, die zum Beispiel einen den Boden ebnenden Striegel Abb. 1 Nr. 18 vor den Saatscharen umfassen. Es wird in der Veröffentlichung FI112586 behauptet, ein solcher Striegel behebe das Strohproblem. Saatbehälter werden je nach Bedarf an die Maschine angeschlossen, u. a. für Kleinsamen, Spurenelemente, diverse Dünger und Beizmittel.

### Kurze Beschreibung der Erfindung

Die vorliegende Erfindung soll Missstände der bekannten Technik beseitigen und eine völlig neuartige Lösung für die Konstruktion und Funktion einer Saatmaschine erzeugen.

Dieser Zweck wird so erreicht, dass die dieser Erfindung entsprechende Saatmaschine in den Patentansprüchen definierte Merkmale aufweist. Insbesondere sind die vorliegenden Probleme zu lösen, indem die Merkmale in der Weise kombiniert werden, wie in dem Merkmalteil des unten aufgeführten Patentanspruchs 1 dargestellt.

Der Basisgedanke der Erfindung ist es, insbesondere die Lauftiefe der Saatschare in unbearbeiteten und in verschiedenen Arten bearbeiteten Böden; von weich bis hart, zu beherrschen.

Mit Hilfe der Erfindung werden bemerkenswerte Vorteile erzielt. So ermöglichen eine weite Einstellmöglichkeit des Schardrucks und die Form des Schars den Einsatz der Maschine bei verschiedenen Verfahren sowie verhindern die Beschädigung der Vorrichtung.

Die der Erfindung entsprechende Saatmaschine kann leicht zu einer Sädüngmaschine umgewandelt werden, die die Dünger entweder in gleiche Reihe mit Samen oder zwischen jede zweite Samenreihe anlegt.

Die der Erfindung entsprechenden, die Maschine tragenden Walzenrollen passen sich den Unebenheiten des Bodens an und dichten die Saatreihen sowie stellen eine gleichmäßige Keimung sicher.

Die der Erfindung entsprechende Saatmaschine kann mit verschiedener Zusatzausrüstung wie mit erforderlichen Vor- und Nachbearbeitungsgeräten versehen werden.

### Kurze Beschreibung der Abbildungen

Im Folgenden wird eine der vorteilhaften Ausführungsformen der Erfindung betrachtet, indem auf die beiliegende Zeichnung hingewiesen wird, bei der
in der Abbildung 1 die prinzipielle seitliche Darstellung der der Erfindung entsprechenden Saatmaschine, teilweise geschnitten, dargestellt wird,
in der Abbildung 2 die Ausgleichshebelwerke der Walzenrollen sowie des Schardrucks dargestellt werden,

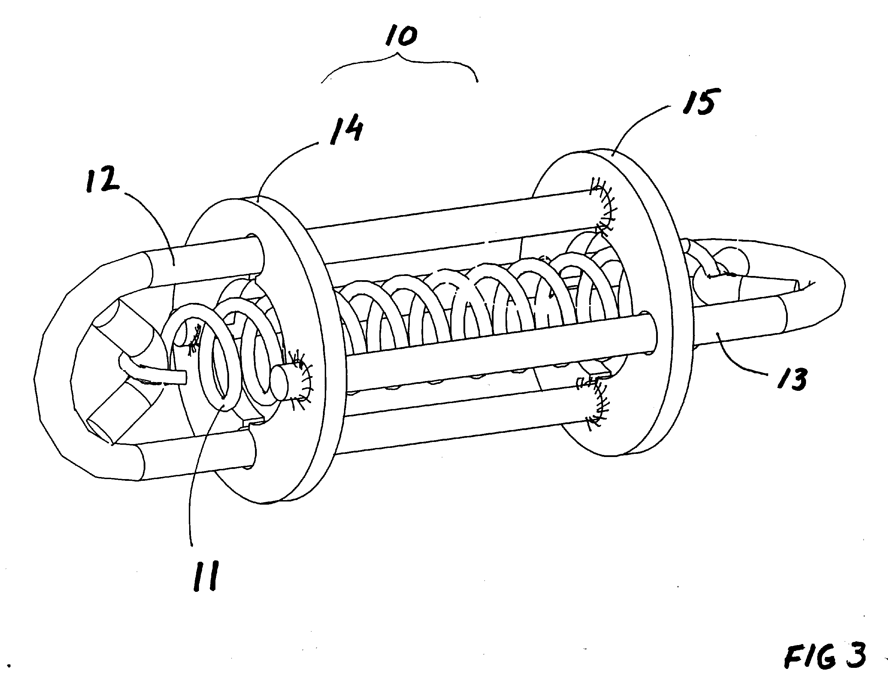

in der Abbildung 3 ein die Dehnung der Spannfeder begrenzendes Maschinenglied dargestellt wird,
in der Abbildung 4 das Schar von oben gesehen dargestellt wird,
in den Abbildungen 5, 6 und 7 der Verlauf der Ereignisse beim Säen des Düngers und
der Samen in gleiche Reihe dargestellt wird.

### Detaillierte Beschreibung der vorteilhaften Ausführungsform

Eine vorteilhafte Ausführungsform der vorliegenden Saatmaschine ist im Folgenden unter Hinweis auf die oben aufgeführten Abbildungen beschrieben. Dabei umfasst die Saatmaschine die in den Abbildungen mit Referenznummern markierten Bauteile, die den in dieser Erläuterung nachstehend angewandten Referenznummern entsprechen.

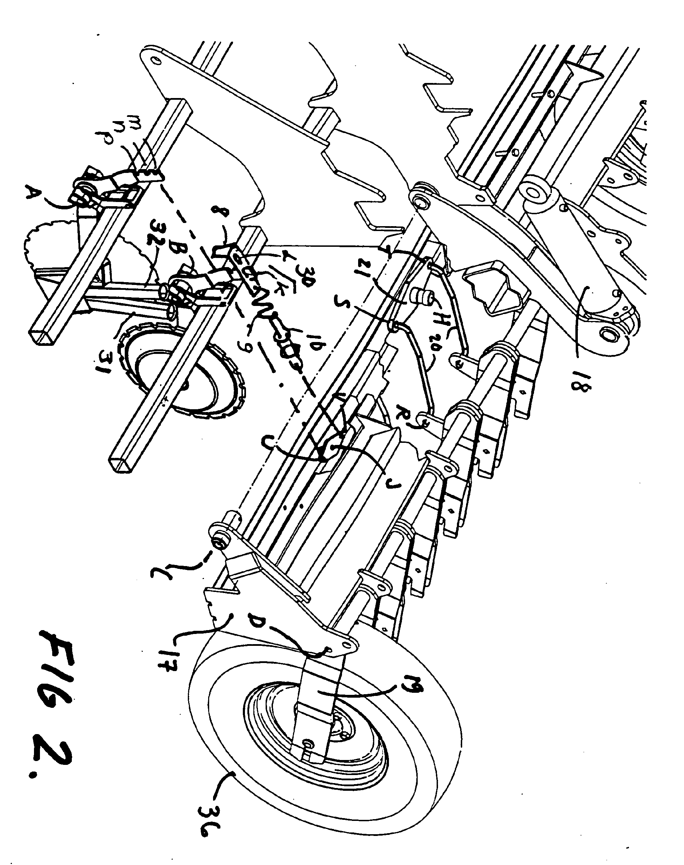

So zeigt die Abbildung 1 eine prinzipielle Seitenansicht einer mit an sich bekannter Arbeitsmaschine geschleppten Saatmaschine. Die Abbildung 2 stellt anschaulich dar, wie sich eine gerade Anzahl Schare in zwei Reihen befindet und die Walzenrollen in einer Reihe paarweise angeordnet sind.

Die Saatmaschine umfasst somit eine mit der Arbeitsmaschine verbundene Deichsel 1, die an den tragenden Hauptrahmen 2 der Vorrichtung angeschlossen ist. An den Hauptrahmen sind die Behälter 3 angeschlossen. Ebenfalls sind an den Rahmen die Befestigungsbalken 4 und 5 der Schare angeschlossen, an denen die Schararme 6 und 7 über die Gelenkpunkte A und B vertikal gedreht verbunden sind. Die Druckkräfte der Schare F1 und F2 werden mit einer Spannvorrichtung 30 folgender Art kontrolliert. Zu dieser Vorrichtung gehören der Stellhebel 8 mit Grobeinstellöffnungen L und K, die an das obere Ende des Schararms geführt und in die gewünschte Kerbe m, n, p etc. verlegt werden können, um die Länge des Momentarms M oberhalb der Gelenkpunkte A und B zu regulieren. An das eine Ende des Stellhebels wird eine Feder 9 angeschlossen, die von der Steifheit her so gewählt wird, dass mit der in allen Bedingungen eine ausreichende Druckkraft des Schars gegen den Boden erzeugt werden kann. An das andere Ende der Feder wird eine die Überbelastung der Feder verhindernde Vorrichtung 10 angeschlossen, die eine für einen leichteren Einsatz bestimmte schwächere Feder 11, Führungsstifte 12, 13 und Anschlagplatten 14, 15 umfasst. Die Vorrichtung 10 ist von einem Ende an einem Ende des an dem Rahmen 17 der Walzenrollen befestigten Ausgleichshebels am Gelenkpunkt U befestigt, wobei die Vorrichtung um den Mittelpunkt J gedreht wird. An das gegenüber liegende Ende am Gelenkpunkt V wird das entsprechende System von dem benachbarten Schar angeschlossen. Die Stellung der Walzenrolle wird mit dem von einander gegenüber angeordneten Enden an den Hauptrahmen und den Rahmen der Walzenrolle verdreht angepassten Stellglied 18 kontrolliert. Die Walzenrollen 36 sind mit vertikal in Bezug auf die Welle D drehbarer Gabel 19 an dem Rahmen der Walzenrolle 17 befestigt. Die Reaktionsstange 20 ist von einander gegenüber angeordneten Enden am vertikal drehbaren Gelenkpunkt R an die Gabel 19 und an den Rahmen 17 über den Mittelpunkt H drehbaren Schwenkhebel 21 an den Gelenkpunkt S angeschlossen. Es gibt eine gerade Anzahl von Walzenrollen, bei denen die entsprechenden Hebel der nebeneinander angeordneten Hebel an den gegenüber liegenden Enden der betreffenden Schwenkhebel 21 an Gelenkpunkten S und T befestigt sind.

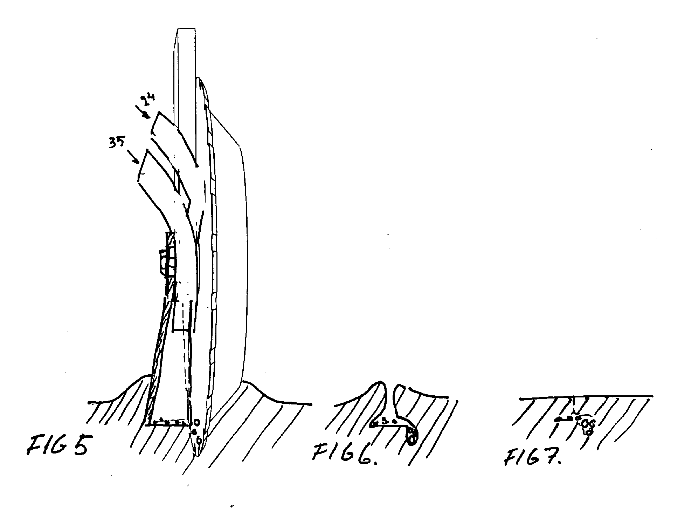

An den Rahmen der Maschine können selbstverständlich mehrere Behälter zum Säen von verschiedenen Substanzen angeschlossen werden. Der Behälter 3 wie in der Abbildung 1 dargestellt, ist in zwei Abteile geteilt, eines als Samen- und eines als Düngerbehälter, von denen die aus den Eingabevorrichtungen 23 und 33 ausgehenden Fallrohre 24, 25 und 35 über die Zuleitungsschläuche 32 und 31 den Dünger mit dem Samen in gleiche Saatreihen in Längsrichtung führen. Ihre getrennte Anordnung kann auf Wunsch mit einer Vorrichtung entsprechend der Abbildung 5 kontrolliert werden. Der Spitzenteil des Schars umfasst eine in Laufrichtung pflügende in geneigter Stellung befindliche Scheibe 26, bei der auf der Seite der Laufrichtung ein mit kegelförmigem Rand versehener Teller 28 befestigt ist. Die Scheibe ist an die Schararme gelagert, auf derer anderen Seite ein vertikal regulierbarer Schleppscharteil 27 angeordnet ist, an dem die Zuleitungsrohre 31 und 32 der Fallrohre sowie die zwischen denen angeordnete demontierbare Führungsplatte 29 befestigt sind. Diese Kombination öffnet die Saatfurche, deren Form durch vertikale Einstellung des Teils 27 geändert werden kann. Die zwischen den Zuleitungsrohren angeordnete demontierbare Führungsplatte 29 schiebt den Dünger in die durch die Scheibe 26 geöffnete Furche und lässt die Samen auf einer höheren Ebene, wie in der Abbildung 6 dargestellt. Die Fallrohre für Dünger 24 und 25 können leicht in eine alternative Stellung U gedreht werden, wobei sie in die als Zubehör an die Maschine anzuschließende Düngerscharreihe 22 führen. Die Arbeitsstellung der Maschine wird mit dem Stellglied 28 reguliert, das zum Beispiel eine Spannschraube oder ein Hydraulikzylinder sein kann.

Beim Einsatz der Saatmaschinen sollen sie möglichst waagerecht angeordnet werden, da der Schardruck in hintereinander angeordneten Scharreihen möglichst gleich groß ausgeführt werden soll, um eine gleichmäßige Saattiefe zu erzielen. Bei der der Erfindung entsprechenden Maschine korrigiert der Ausgleichshebel 16 sowohl die durch diese Fehlstellung als auch die Unebenheit der Bodenfläche verursachte Abweichung beim Druck der Schare. Andererseits ist es möglich, dass die Reihen mit verschiedenen Kräften gedrückt werden sollen, wobei der betreffende Hebel einen anderen Arm aufweisen kann.

Mit dem Stellglied 18, das zum Beispiel ein Hydraulikzylinder ist, wird der Abstand der Maschine von dem Boden kontrolliert, indem die Länge des Stellglieds geändert wird, wobei der Rahmen 17 der Walzenrollen um die Welle C gedreht wird und den Mittelpunkt J in waagerechter Richtung wesentlich nach hinten verschiebt. Entsprechend werden die an der Kerbe der Schararme 6 und 7 des oberen Endes befestigten Stellhebel 8 nach vorn verschoben. Somit ist die Druckkraft beim höchsten Bodenabstand auf Grund der Dehnung der Spannvorrichtungen 30 am kleinsten und bei niedriger Höhe wiederum am größten. Auf Grund der Funktion einer solchen Erfindung ist es zur Erzeugung der wichtigen Bewegungsbahn wichtig, dass die senkrechte Entfernung der Mittellinie der Vorrichtung 30 von der Schwenkachse C ausreichend groß ausgeführt werden kann. Zugleich ist die umfangreiche vertikale Bewegung der Schare wichtig. Die Länge des Stellglieds 18 kann über verschiedene an sich bekannte Messvorrichtungen oder Anschläge geführt werden. Wenn mit möglichst kleinem Schardruck gesät wird, wird von den Stellöffnungen die Stelle L und die Kerbe des kürzesten Momentarms p gewählt, wobei die Dehnung der Spannvorrichtung am kleinsten ist und es möglich ist, den Bereich der durch die kleinere Feder 11 erzeugte Kraft zu nutzen. Wenn größere Druckkraft erforderlich ist, wird die Stelle K des Stellhebels und die Kerbe m des längsten Momentarms des Arms m genutzt. Darüber hinaus wird der Abstand der Maschine vom Boden so viel verkleinert, dass die Feder 11 in eine Stellung gedehnt worden ist, bei der die an der Vorrichtung 10 vorhandenen, die zusätzliche Dehnung verhindernden Anschlagplatten 14 und 15 gegenüber angeordnet werden. Dabei kommt die Kraft der steiferen Feder 9 zum Einsatz. Um eine exakte Saattiefe zu erzielen, reicht das der Erfindung entsprechende Druck- und Ausgleichssystem nicht immer aus, sondern die Form des Schars muss auch berücksichtigt werden. Eine solche Lösung ist in der Abbildung 5 dargestellt. Da ist an die Flanke des Scheibenschneiders 26 ein von den Rändern keilförmiger Teller 28 angeschlossen worden. Wenn der Boden weicher wird, neigt die Scheibe dazu, tiefer zu sinken, dabei nimmt die tragende Fläche des keilförmigen Tellers stark zu und verursacht die erforderliche tragende Gegenkraft. Wenn der Boden härter wird, ist der Verlauf entgegengesetzt. Der keilförmige Rand des Tragtellers muss auch ausreichend scharf sein, damit er eventuelle Klumpen schneiden kann und somit das nicht erwünschte Springen des Schars verhindert. Eine solche Saattiefe des Schars kann auch durch relativ geringe Änderung der Spannkraft beeinflusst werden. Das Tragen des Schars findet also möglichst nahe der Austragsstelle der Samen statt, somit wird die Saattiefe in Bezug auf den Erdboden möglichst eben erhalten. Auch wenn die derzeitigen Felder relativ gut gepflegt sind, können Unebenheiten niemals vollständig eliminiert werden. Aus dem Grund müssen sich die Walzenrollen an die Feldfläche anpassen und eine möglichst gleichmäßige abdichtende Auswirkung auf die Saatreihen erzeugen. Eine solche Auswirkung wird mit den der Erfindung entsprechenden Walzerollen erzielt, wobei die Rollen paarweise von den Befestigungsgabeln 19 mittels der Reaktionsstangen 20 an dem das Gewicht ausgleichenden Schwenkhebel 21 befestigt sind.

## Patentansprüche

1. Eine Saatmaschine, die eine an die Arbeitsmaschine anzuschließende Deichsel (1), einen die Vorrichtung tragenden Hauptrahmen (2) und den daran um die Achspunkt (C) herum mittels des Stellglieds (18) drehbaren Rahmen (17) der Walzenrollen aufweist, an die die Walzenrollen (36) über die Gabeln (19) drehbar mittels der Welle (D) angeschlossen sind, wobei der Hauptrahmen mindestens zwei hintereinander angeordnete Befestigungswellen (4) und (5) aufweist, an denen über die Gelenkpunkte (A) und (B) drehbar Schararme (6) und (7) befestigt sind, an derer oberen Enden, an Momentarm (M) eine Spannvorrichtung (30) befestigt ist, **dadurch gekennzeichnet, dass**
ein Ende der Spannvorrichtungen (30) an dem Rahmen der Walzenrollen wesentlich unterhalb des Wendepunkts (C) am Punkt (J) befestigt wird.

2. Dem Patentanspruch 1 entsprechende Saatmaschine, **dadurch gekennzeichnet, dass** am Punkt (J) herum drehbar ein Ausgleichshebel (16) befestigt ist, an den, an deren Enden vorhandenen, Gelenkpunkten (U) und (V) die Spannvorrichtung befestigt ist.

3. Dem Patentanspruch 1 entsprechende Saatmaschine, **dadurch gekennzeichnet, dass** ein Ende der paarweise funktionierenden Gabeln (19) drehbar an der Welle (D) und ein Ende über den Gelenkpunkt (R) mittels der Reaktionsstangen (20) an dem Rahmen (17) über die Gelenkpunkte (S) und (T) des über den Mittelpunkt (H) befestigten Schwenkhebels (21) befestigt wird.

4. Dem Patentanspruch 1 entsprechende Saatmaschine, **dadurch gekennzeichnet, dass** die Spannvorrichtung (30) mindestens zwei Federn aufweist, von denen die schwächere Feder (9) vor zu übermäßiger Dehnung durch die Vorrichtung (10) geschützt wird, die mindestens Führungsstifte (12) und (13) und Anschlagplatten aufweist (14) und (15).

5. Dem Patentanspruch 1 entsprechende Saatmaschine, **dadurch gekennzeichnet, dass** an das untere Ende der Schararme (6) und (7) eine Scheibe (26) gelagert worden ist, an deren Flanke ein mit einem keilförmigen Rand versehener Teller (28) zum Tragen des Schars befestigt ist, sowie auf der anderen Seite des Arms ein in vertikaler Richtung einstellbarer Schleppscharteil (27) befestigt ist, an dem die Zuleitungsrohre (31) und (32) der Fallrohre sowie ein demontierbares Führungsplatte (29) befestigt sind.

6. Dem Patentanspruch 1 entsprechende Saatmaschine, **dadurch gekennzeichnet, dass** die aus den Eingabevorrichtungen der Düngerseite ausgehenden Rohre (24) und (25) in eine alternative Stellung (Y) gedreht werden können, wobei sie zu der als Zubehör zu installierenden Scharreihe (22) führen.
